# FASCICULE DE BREVET EUROPEEN

(11) **EP 2 486 701 B1**
(45) Date de publication et mention de la délivrance du brevet: **09.04.2014**
(21) Numéro de dépôt: 10763807.4
(22) Date de dépôt: 03.09.2010
(51) Int. Cl.: H04L 12/28

(54) **DISPOSITIF D'INTERACTION AVEC UN OBJET AUGMENTE**
INTERAKTIONSVORRICHTUNG MIT EINEM VERGRÖSSERTEN GEGENSTAND
INTERACTION DEVICE WITH AN AUGMENTED OBJECT

(30) Priorité: 05.10.2009 FR 0956914
(43) Date de publication de la demande: 15.08.2012
(73) Titulaire: Alcatel Lucent, 75007 Paris (FR)
(72) Inventeur: PASTOR, Alain, F-91620 Nozay (FR); JEAN, José, F-91620 Nozay (FR)
(74) Mandataire: ALU Antw Patent Attorneys
(86) Numéro de dépôt international: PCT/FR2010/051837
(87) Numéro de publication internationale: WO 2011/042632

(56) Documents cités:
- WO-A1-2006/009521
- WO-A2-2009/113067

## Description

La présente invention concerne un nouveau paradigme d'interaction, permettant à un utilisateur d'interagir avec au moins un objet d'un environnement, par l'intermédiaire d'une liaison vidéo.

De nombreux environnements et applications nécessitent l'interaction d'un utilisateur avec des objets vus au travers d'une liaison vidéo, par exemple dans des cas d'objet distants, ou d'environnements dangereux.

Il est connu, par exemple de US 6463343, de visualiser, via une liaison vidéo, un environnement comprenant au moins un objet "actif", et d'afficher en surimposition des éléments d'interface de commande associés à des services offert par ledit objet, afin de permettre à un utilisateur d'interagir avec ledit objet, la liaison vidéo permettant de contrôler visuellement les conséquences d'une l'interaction.

Cependant dans US 6463343, l'utilisateur doit, préalablement à toute interaction, définir des associations entre d'une part des éléments d'interface de commande typiquement issus d'un moyen de stockage et d'autre part des services offerts par un objet.

Depuis l'avènement de l'Internet des objets ("Internet of Things" en anglais), la découverte et le contrôle d'objets distants au travers d'une image vidéo est devenu un domaine d'intérêt majeur. Le problème principal consiste à découvrir et à agir sur un objet interactif via une liaison vidéo, en limitant les travaux d'intégration d'interface et de configuration.

Ceci implique une capacité à distinguer automatiquement des objets pouvant présenter une interface de commande à distance des autres objets ordinaires, ainsi qu'une capacité à présenter cette interface de commande à l'utilisateur en cohérence avec ladite vidéo, afin de permettre à l'utilisateur de commander l'objet distant en utilisant des services proposés par ledit objet.

Aujourd'hui, il est uniquement connu d'insérer une information statique dans une vidéo, ou encore d'insérer des commentaires dans une zone spécifique d'une image. WO2009/113067 décrit une prise d'image et l'interaction d'information avec un terminal client.

La présente invention remédie à ces inconvénients en proposant des moyens permettant d'associer automatiquement un objet actif avec des interfaces de commande ou des moyens de définition de telles interfaces. Ceci est rendu possible au moyen d'un concept novateur d'objet augmenté. Un tel concept trouve naturellement sa place dans les développements actuels autour de l'Internet des objets.

L'invention a pour objet un dispositif permettant à un utilisateur, situé dans une zone utilisateur, d'interagir avec au moins un objet augmenté présent dans un environnement, ledit objet augmenté étant situé dans une zone objet, l'objet augmenté comprenant un objet physique et un objet virtuel associés, ledit objet virtuel comprenant au moins un élément de définition d'au moins un service offert par ledit objet augmenté, ledit objet augmenté étant connectable via un premier moyen de communication et ledit dispositif comprend :
- un moyen de capture vidéo, situé en zone objet, apte à réaliser une prise d'image vidéo, d'au moins une partie dudit environnement,
- un second moyen de communication, apte à transmettre ladite image vidéo de la zone objet à la zone utilisateur,
- un terminal utilisateur situé en zone utilisateur, apte à afficher ladite image vidéo, afin de la présenter à l'utilisateur,
- un moyen d'identification automatique de l'objet augmenté lorsque l'objet physique associé est présent dans le champ du moyen de capture vidéo,
- un premier moyen de communication, apte à établir une connexion entre le dispositif et l'objet augmenté identifié, et à récupérer lesdits éléments de définition de service offert par ledit objet augmenté,
- un moyen de définition d'interface de commande, apte à définir une interface de commande pour les services de l'objet augmenté identifié en accord avec lesdits éléments de définition de service, et à présenter ladite interface de commande à l'utilisateur, via le terminal utilisateur,
- un moyen de lecture des commandes desdits services, apte à lire les commandes issues de l'utilisateur, en relation avec ladite interface de commande,
- un troisième moyen de communication, apte à transmettre lesdites commandes à l'objet augmenté, pour exécution desdits services par l'objet physique.

Selon une autre caractéristique de l'invention, le dispositif comprend encore un moyen de capture sonore, situé en zone objet, apte à réaliser une prise de son de l'environnement, un quatrième moyen de communication, apte à transmettre ledit son de la zone objet à la zone utilisateur, le terminal utilisateur comprenant un moyen de restitution sonore, apte à restituer ledit son à l'utilisateur.

Selon une autre caractéristique de l'invention, le moyen de capture vidéo est pilotable en orientation et/ou en position, le terminal utilisateur comprend encore un moyen de commande, apte à permettre à l'utilisateur de réaliser ledit pilotage en produisant des commandes de pilotage, et le dispositif comprend encore un cinquième moyen de communication, apte à transmettre lesdites commandes de pilotage de la zone utilisateur à la zone objet.

Selon une autre caractéristique de l'invention, le moyen d'identification automatique de l'objet augmenté comprend un moyen de reconnaissance de forme de l'objet physique.

Selon une autre caractéristique de l'invention, le moyen d'identification automatique de l'objet augmenté comprend un moyen de localisation de l'objet physique.

Selon une autre caractéristique de l'invention, le moyen d'identification automatique de l'objet augmenté comprend un repère identifiant disposé sur ou a proximité de l'objet physique.

Selon une autre caractéristique de l'invention, le moyen de définition d'interface, est apte à utiliser une interface de commande directement proposée par l'objet augmenté.

Selon une caractéristique alternative de l'invention, le moyen de définition d'interface, est apte à récupérer depuis un moyen de stockage une interface de commande définie en accord avec les éléments de définition de service.

Selon une autre caractéristique de l'invention, le moyen de définition d'interface, est apte à afficher ladite interface de commande, en incrustation dans l'image vidéo affichée sur le terminal utilisateur.

Selon une autre caractéristique de l'invention, le moyen de lecture des commandes desdits services, en relation avec ladite interface de commande, comprend un clavier, une dalle tactile, et/ou un dispositif de pointage.

Selon une autre caractéristique de l'invention, le troisième moyen de communication des commandes desdits services à l'objet augmenté, comprend une liaison entre le terminal utilisateur et l'objet augmenté et une interface de connexion spécifique entre l'objet virtuel et l'objet physique.

Selon une autre caractéristique avantageuse de l'invention, le premier, le second, le troisième, le quatrième et le cinquième moyens de communication comprennent le réseau internet.

D'autres caractéristiques, détails et avantages de l'invention ressortiront plus clairement de la description détaillée donnée ci-après à titre indicatif en relation avec des dessins sur lesquels :
- la figure 1 présente un synoptique d'un dispositif selon l'invention,

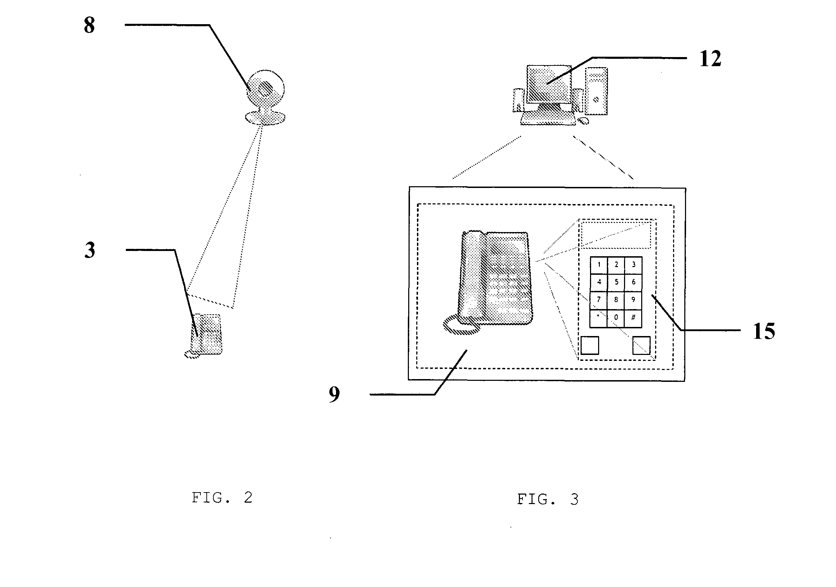

- la figure 2 illustre un exemple de zone objet comprenant un objet augmenté,
- la figure 3 montre un exemple d'affichage superposant une image vidéo et une interface de commande pour l'objet augmenté présenté à la figure 2.

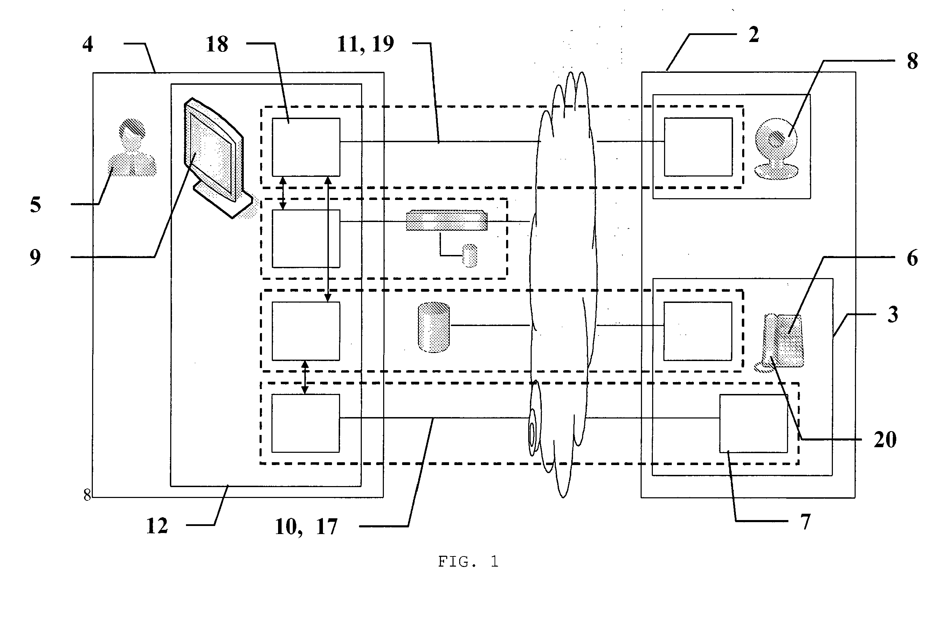

La figure 1, représente un dispositif 1 selon l'invention. Dans une zone dite objet 2, est présent un environnement comprenant au moins un objet augmenté 3. Ledit dispositif 1 permet à un utilisateur 5 situé dans une zone utilisateur 4, généralement distincte et distante de la zone objet 2, de détecter le ou les objets augmentés 3 et d'interagir avec eux. Pour cela, selon une caractéristique essentielle de l'invention, un objet augmenté est construit autour d'un objet physique 6, auquel est adjoint un objet virtuel 7. Ledit objet physique 6 est un objet 6 du monde réel, de préférence un objet actif, au sens où il peut proposer au moins un service.

A titre d'exemples illustratifs et non limitatifs, on citera quelques objets 3, afin d'expliciter le propos. Ainsi une lampe est un objet qui peut proposer deux services : un service « allume » d'allumage de ladite lampe et un service « éteint » d'extinction de ladite lampe. Un lecteur multimédia est un autre objet qui peut par exemple proposer un service « diffusion » d'un contenu multimédia. Enfin un téléphone est un objet qui peut proposer un service « appel » de mise en relation téléphonique.

Afin de définir l'objet augmenté 3 et les services qu'il peut proposer, un objet virtuel 7 est associé à l'objet physique 6. Cet objet virtuel 7 est un objet du monde informatique. Il comprend ainsi des éléments purement logiciels de type donnée et/ou programme, et peut encore comprendre des éléments physiques, typiquement électroniques, de gestion, d'interface ou d'interconnexion.

Ledit objet virtuel 7, peut comprendre au moins un élément de définition et/ou d'identification de l'objet physique 6. Ainsi un objet augmenté 3 est défini de manière unique, dans un environnement donné. L'objet virtuel 7 associé à un objet physique 6 comprend au moins un élément de définition, définissant le ou les services offerts par ledit objet augmenté 3, via l'objet physique 6.

Selon une caractéristique essentielle de l'invention, un objet augmenté est connectable via un premier moyen de communication 10, par exemple de type réseau. La connexion et l'interface de communication avec ledit moyen de communication 10 sont assurées par l'objet virtuel 7 de l'objet augmenté 3. Ainsi un utilisateur 5 peut, via un terminal utilisateur 12, se connecter avec un objet augmenté 3, afin de dialoguer et d'échanger des informations.

Le dispositif 1 comprend un moyen de capture vidéo 8 apte à réaliser une prise d'image vidéo 9 d'au moins une partie de l'environnement. Ce moyen de capture vidéo 8 est situé en zone objet 2. Ce moyen de capture vidéo 8 peut comprendre au moins une caméra vidéo, par exemple de type webcam.

Un second moyen de communication 11, permet de transmettre ladite image vidéo 9 capturée, depuis la zone objet 2 vers la zone utilisateur 4.

L'utilisateur 5 dialogue avec le dispositif 1 et le commande au moyen d'un terminal utilisateur 12. Ce terminal utilisateur 12 est situé en zone utilisateur 4 et est apte à afficher ladite image vidéo 9 capturée et transmise, afin de la présenter à l'utilisateur 5. Ainsi, l'utilisateur 5 peut avantageusement, à distance, être visuellement informé, en temps réel, de ce qui se déroule dans la zone objet 2.

Le dispositif 1 comprend encore un moyen d'identification 13 automatique d'un objet augmenté 3 lorsque l'objet physique 6 associé à cet objet augmenté 3 est présent dans le champ du moyen de capture vidéo 8. Ledit moyen d'identification 13 peut fonctionner selon différents principes, dont certains vont être détaillés à titre illustratif. L'identification peut être réalisée à tout moment, à la demande ou en permanence. Cependant il convient qu'un objet 3 soit identifiable, au moins lorsqu'il est visible du moyen de capture vidéo 8 et présent dans l'image vidéo 9 présentée à l'utilisateur 5. Comme il sera détaillé plus loin, l'identification permet de reconnaître l'objet 3, mais encore de l'identifier de manière unique. Cette identification fournit ainsi un moyen de localiser ledit objet 3 afin de pouvoir se connecter avec lui. Ainsi dans le cas d'un réseau de communication, l'identification fournit une adresse réseau unique dudit objet augmenté 3, permettant de localiser l'objet sur le réseau et de s'y connecter.

Le dispositif 1 comprend encore un premier moyen de communication 10. Ce premier moyen de communication 10 permet d'établir une connexion entre le dispositif 1 et l'objet augmenté 3 ainsi identifié, en se basant sur le ou les éléments d'identification fournis par le moyen d'identification 13. Cette connexion établie avec l'objet augmenté 3 permet d'interroger l'objet augmenté 3 afin de récupérer des informations concernant l'objet augmenté 3 contenues dans un moyen de stockage associé audit objet 3 ou référencé par ledit objet 3.

Parmi les informations ainsi récupérées, le dispositif 1 distingue au moins des éléments de définition d'un ou plusieurs services offerts par ledit objet augmenté 3.

Ainsi, en reprenant l'exemple de la lampe, le dispositif se connecte avec la lampe augmentée identifiée et récupère deux services « allume » et « éteint » ainsi que les éléments de définition de ces services. Ainsi dans le cas présent les éléments de définition du service « allume » comprennent par exemple son nom « allume », sa typologie : commande binaire, ainsi que les éléments nécessaires à son implémentation : adresse ou connexion physique à activer pour réaliser le service d'allumage de la lampe.

Il va de soi que si plusieurs objets augmentés 3 peuvent être identifiés dans une image vidéo 9, plusieurs connections sont établies, séquentiellement ou en parallèle, entre le dispositif 1 et chacun des différents objets augmentés 3, afin de récupérer les informations pour chacun.

Le dispositif 1 comprend encore un moyen de définition 14 d'interface de commande, qui, à partir des éléments de définition des services d'un objet augmenté 3, peut définir une interface de commande 15 pour les services de l'objet augmenté 3 identifié. Cette interface de commande 15 présente une face parlante, par exemple graphique, qui peut être affichée sur le terminal utilisateur 12 afin d'être perçue par l'utilisateur 5. En relation avec cette face parlante, l'interface de commande 15 comprend les connexions nécessaires à la transmission des commandes de services à l'objet augmenté 3. L'interface de commande 15 est définie en accord avec les éléments de définition de service.

Le dispositif 1 comprend encore un moyen de lecture 16 apte à lire des commandes, appliquées par l'utilisateur 5. Ce moyen de lecture 16 est configuré en accord avec les éléments de définition de service extraits de l'objet augmenté 3 identifié et en relation avec la face parlante de ladite interface de commande 15.

Ainsi pour revenir à l'exemple de la lampe, les deux services « allume » et « éteint », vont, par exemple, être figurés sur une interface de commande 15 comprenant deux boutons. Ces deux boutons vont être figurés graphiquement, chacun reconnaissable par son nom. Le moyen de lecture 16 est alors capable de détecter un actionnement par l'utilisateur 5 de l'un ou l'autre de ces deux boutons. Si l'utilisateur actionne le bouton associé au service « allume », le moyen de lecture 16 lit une commande de service correspondante « allume ».

Le dispositif comprend encore un troisième moyen de communication 17. Ce moyen de communication est en charge de transmettre une commande ainsi lue par le moyen de lecture 16, à destination de l'objet augmenté 3. Cette transmission est réalisée afin que l'objet augmenté 3 reçoive ladite commande et exécute sur l'objet physique 6 le service correspondant.

Ainsi pour continuer avec l'exemple de la lampe, une commande « allume » a été lue. Elle est transmise à l'objet lampe augmenté qui actionne alors les éléments d'interface nécessaires pour que le service soit exécuté et que la lampe physique s'allume.

La perception de l'environnement présentée à l'utilisateur 5 est avantageusement visuelle au travers de l'image vidéo 9. Elle peut cependant être remplacée ou complétée par des retours d'information selon d'autres modalités sensuelles. Ainsi le dispositif 1 peut avantageusement comprendre un moyen de capture sonore, en zone objet 3, en coïncidence géographique ou non avec le moyen de capture vidéo 8, afin de réaliser une prise de son de l'environnement. Un quatrième moyen de transmission est alors utilisé pour transmettre ledit son depuis la zone objet 2 vers la zone utilisateur 4, afin de restituer ledit son au moyen d'un moyen de restitution sonore, de type casque ou haut parleur, compris dans le terminal utilisateur 12, à l'attention de l'utilisateur 5.

Il est encore possible d'ajouter sur le même principe d'autres retours, tel un retour tactile. Toutes ces aides perceptuelles se conjuguent pour renseigner l'utilisateur 5 sur l'environnement et ce qui s'y déroule, notamment en réponse aux actions de l'utilisateur 5 commandant les services des objets augmentés 3 et modifiant ainsi ledit environnement.

Avantageusement, afin de faire varier le champ perçu par le moyen de capture vidéo 8 et ainsi augmenter l'étendue de l'environnement perceptible par l'utilisateur 5 distant, le moyen de capture vidéo 8 est pilotable. Ainsi un capteur vidéo peut être pilotable en orientation, par exemple en site et gisement. Un capteur vidéo peut encore être pilotable en zoom. Un capteur vidéo peut encore être pilotable en position. Cette dernière possibilité peut être réalisée au moyen d'une base mobile, tel un robot pilotable, un capteur vidéo étant monté sur ladite base mobile. Ceci peut encore être réalisé avec une pluralité de capteurs vidéo couplés à un moyen de sélection de source de type régie. Il est encore possible de combiner ces différents modes de réalisation. Le terminal utilisateur 12 comprend alors un moyen de commande 18 adapté à la structure du moyen de capture vidéo 8, apte à permettre à l'utilisateur 5 de réaliser ledit pilotage en produisant des commandes de pilotage. Le dispositif 1 comprend avantageusement un cinquième moyen de communication 19 capable de transmettre lesdites commandes de pilotage depuis la zone utilisateur 4 vers la zone objet 2, pour exécution par le ou les organes de pilotage réalisant les orientations, positions, sélections, du moyen de capture vidéo 8.

Une part importante du dispositif 1 est tenue par l'identification de l'objet augmenté 3. Plusieurs techniques sont applicables pour indifféremment obtenir une telle identification. Cette identification est nécessaire en ce qu'elle permet de désigner de manière unique l'objet augmenté 3 afin de réaliser une connexion avec ledit objet augmenté 3.

Un premier mode de réalisation d'un moyen d'identification peut utiliser une reconnaissance de forme selon toute méthode connue, par analyse de l'image vidéo 9. Cependant une telle analyse permet une reconnaissance et non une identification. L'analyse de la forme permet ainsi de reconnaître qu'un objet est une lampe, mais l'identification nécessite de savoir précisément de quelle lampe il s'agit.

Une méthode par reconnaissance de forme doit ainsi être complétée par d'autres moyens. Il est ainsi possible de procéder en utilisant un inventaire préalable. La lampe peut ainsi être identifiée de manière certaine s'il n'y a qu'une lampe (ou qu'une lampe de ce type/couleur, ou dans cet environnement/cette pièce).

Un autre mode de réalisation d'un moyen d'identification 13 peut employer, seul ou en combinaison avec un autre moyen tel que la reconnaissance de forme, une localisation de l'objet physique 6. Ainsi l'objet est identifié en fonction de sa localisation. L'objet est une lampe parce qu'il est dans le coin gauche de la pièce. Ou encore en combinaison, la lampe reconnue par sa forme est la lampe n°3 parce qu'elle est (la seule lampe) située à un mètre au dessus du sol. Une telle approche nécessite cependant une définition préalable, par exemple sous forme d'une cartographie, des positions des différents objets, ce qui réduit la généricité du dispositif. Un autre inconvénient est qu'il devient difficile ou impossible d'identifier un objet augmenté 3 dès lors qu'il a été déplacé.

La détermination de la position d'un objet peut être réalisée à partir de la position et de l'orientation du moyen de capture vidéo 8. Ainsi la position du capteur vidéo étant connue, parce qu'elle est fixe ou par tout moyen de localisation connu, tel qu'un récepteur gps, si elle est variable, la position d'un objet peut être déterminée par la connaissance des angles d'orientation dudit capteur vidéo. A proprement parler un tel repérage indique une droite et non une position. Cependant un tel repérage peut suffire à identifier un objet 3, si aucun autre objet (ou objet du même type, ou de même forme, etc) n'est présent sur ladite droite.

Cependant, un mode de réalisation d'un moyen d'identification 13 ne nécessitant aucune préparation de type cartographie préalable et tolérant un éventuel et toujours possible déplacement de l'objet 3, est préférable. Un tel moyen d'identification 13 peut être réalisé en équipant l'objet physique 6 associé à un objet augmenté 3 que l'on souhaite identifier, d'un repère identifiant 20. Un tel repère 20 est unique afin d'être identifiant. Il est disposé, sur ou à proximité de l'objet physique 6. Il est placé de manière à pouvoir être vu/lu selon sa nature. Sa signature (forme, couleur, codage, etc.) caractéristique est consignée dans une table de correspondance, accessible du dispositif 1, associant une signature à un identifiant unique d'objet augmenté (par exemple l'adresse réseau dudit l'objet augmenté 3). Une approche alternative consiste à coder directement les éléments d'identification d'objet augmenté 3 permettant la connexion dans le repère identifiant 20.

Selon ce mode de réalisation, une préparation préalable de l'environnement est ici aussi nécessaire. Cependant ici, la préparation est réalisée, une fois pour toute, pour chaque objet augmenté 3, individuellement et indépendamment. Il est envisageable, que tous les objets candidats soient demain configurés ainsi en usine, en leur associant de manière unique un repère identifiant 20 visible/lisible et une adresse de connexion réseau, par exemple l'actuelle adresse MAC. Si la correspondance entre le repère identifiant 20 et les éléments d'identification de connexion n'est pas codée directement dans le repère identifiant lui-même, la table de correspondance peut être publiée par le fabricant de l'objet, par exemple sur Internet, afin d'être accessible.

Le repère identifiant 20 peut être un repère visuel (pictogramme, code barre, code couleur, etc.) visible avantageusement par le moyen de capture vidéo 8, afin d'être reconnu par le dispositif 1, par exemple par analyse d'image. Un visuel « codant », tel un code barre, permet avantageusement d'inclure directement l'identifiant de connexion réseau dans son code, ou encore une adresse ou tout autre moyen de référence permettant de le retrouver.

Avantageusement un tel repère visuel ne nécessite pas de moyen additionnel de lecture, puisqu'il réutilise le moyen de capture vidéo 8. Un inconvénient d'un tel repère visuel est qu'il n'est visible que depuis une zone limitée de l'espace autour d'une direction privilégiée.

Selon un mode de réalisation alternatif, le repère identifiant est une étiquette radiofréquence, encore connue sous le nom de RFID. Dans ce cas, le dispositif 1 doit encore comprendre un lecteur de telles étiquettes radiofréquence. Ce lecteur situé en zone objet 2, est apte à lire une telle étiquette radiofréquence. Une telle étiquette radiofréquence est « codante » avec l'avantage précédemment évoqué. Avantageusement une telle étiquette radiofréquence n'a pas besoin d'être vue pour pouvoir être lue et peut être dissimulée/enfouie dans l'objet 3. Avantageusement encore la lecture d'une telle étiquette radiofréquence peut s'effectuer indifféremment depuis toute direction de l'espace.

Il a été décrit que le moyen de définition d'interface 14 extrait de l'objet augmenté 3, les éléments de définition de l'interface de commande 15 associée aux services proposés par ledit objet augmenté 3. L'interface de commande est au moins définie par l'objet 3 de manière typologique. Ainsi dans l'exemple de la lampe, les éléments de définition de l'interface de commande 15 comprennent au moins l'indication, que chacun des deux services « allume » et « éteint » est associé à une commande binaire. L'objet peut encore comprendre des indications plus précises, telles que la disposition, l'apparence ou même la représentation graphique détaillée d'une interface de commande 15 proposée par l'objet augmenté 3.

Selon un premier mode de réalisation, le moyen de définition d'interface 14 utilise directement et entièrement l'interface de commande proposée par l'objet augmenté 3. Ceci permet de respecter une esthétique graphique propre à l'objet augmenté 3.

Alternativement, le moyen de définition d'interface 14 utilise les éléments de définition typologique pour construire une interface de commande 15 compatible de l'objet 3 et de ses services, mais définit un apparence graphique sans tenir compte de celle proposée par l'objet augmenté 3. Ceci permet au moyen de définition d'interface 14 de proposer une interface de commande 15 présentant une esthétique graphique homogène d'un objet augmenté 3 à l'autre.

Cette capacité à extraire de l'objet augmenté 3 automatiquement identifié dans une image vidéo 9 les éléments de définition typologique d'interface et tout ou partie de leur représentation graphique, sans aucune connaissance préalable de l'environnement ou des objets est très avantageuse en ce qu'elle permet une mise en oeuvre du dispositif 1 sans définition, modélisation de l'environnement ou configuration préalable.

De plus, une identification automatique et autonome (sans configuration ou préparation) permet d'appréhender un environnement inconnu et de tolérer une évolution dudit environnement, par exemple par déplacement des objets 3.

Il est évident que les éléments extraits après connexion à l'objet augmenté 3 peuvent être extraits d'un moyen de stockage effectivement compris dans l'objet augmenté 3 lui-même. Alternativement, il peut être extrait de l'objet 3 une référence, une adresse, indiquant un moyen de stockage déporté où sont stockés ces éléments.

Après avoir défini ladite interface de commande 15, le moyen de définition 14 est capable de l'afficher sur un moyen d'affichage avantageusement compris dans le terminal utilisateur 12.

Selon un mode de réalisation particulièrement avantageux, l'affichage de ladite interface de commande 15 est réalisé, par incrustation graphique, directement dans l'image vidéo 9. Ainsi, sur un même moyen d'affichage l'utilisateur 5 dispose de toutes les informations nécessaires à une interaction avec un objet 3 en vue d'utiliser ses services. L'interface de commande est ainsi avantageusement disposée à proximité de l'objet augmenté 3 auquel elle est associée. L'utilisateur 5 peut ainsi commander les services de l'objet 3 au moyen de ladite interface de commande 15, et sur une même visualisation observé les conséquences de l'utilisation d'un service.

Ainsi toujours pour l'exemple de la lampe, sur une image vidéo dans laquelle apparaît la lampe, est surimposé, non loin de la lampe, afin de rendre évidente l'association, une représentation graphique d'une interface de commande figurant deux boutons « allume » et « éteint ». L'utilisateur 5 lorsqu'il commande l'un de ces deux services, peut directement en observer la conséquence sur l'environnement observé par l'image vidéo 9. Ainsi après commande du service « allume », la lampe est allumée, et l'utilisateur 5 peut observer l'effet de l'éclairage sur l'environnement.

En correspondance avec ladite interface de commande 15 ainsi présentée à l'utilisateur 5, le dispositif 1 comprend un moyen de lecture 16 des commandes effectuées par l'utilisateur 5. Ce moyen de lecture 16 peut comprendre un clavier, une dalle tactile, et/ou encore un dispositif de pointage. Ce ou ces éléments sont configurés en relation avec l'interface de commande 15. Ainsi dans l'exemple de la lampe un clavier peut être utilisé en associant une touche à chacun des deux services « allume » et « éteint ». Un appui sur une touche commandant ledit service. Une dalle tactile peut aussi être utilisée. Avantageusement elle est superposée avant le moyen d'affichage sur lequel apparaît la représentation graphique de l'interface de commande 15. De manière classique encore, un dispositif de pointage de type souris (ou joystick, trackball, pad, etc.) peut être employé. Dans ce cas un bouton graphique est activé par un clic sur sa zone active.

Un objet augmenté 3, tel que défini en relation avec la présente invention, est essentiellement connectable. Un premier moyen de communication est ainsi utilisé pour accéder aux informations de l'objet et définir son interface de commande.

Un troisième moyen de communication 17 est encore utilisé pour transmettre une commande d'un service, depuis le terminal utilisateur 12 qui a lu ladite commande issue de l'utilisateur 5, jusqu'à l'objet augmenté 3 qui exécute ladite commande pour réaliser le service correspondant.

Ce troisième moyen de communication 17 comprend systématiquement une première liaison entre le terminal utilisateur 12 et l'objet augmenté 3. Cette liaison le plus souvent de type réseau établit une liaison entre le terminal utilisateur 12 et l'objet virtuel 7. Il peut de plus comprendre une seconde liaison. Cette seconde liaison est une interface de connexion spécifique entre l'objet virtuel 7 et l'objet physique 6. Ainsi dans le cas de la lampe qui est avant augmentation un objet purement physique, il est nécessaire de le compléter par une interface de connexion spécifique associant physiquement les deux services virtuels « allume » et « éteint » avec un dispositif interrupteur.

Dans le cas d'un objet électronique ou informatique, tel un disque dur réseau ou un lecteur DVD disposant d'une interface Internet, comportant intrinsèquement une interface réseau, ces deux liaisons se confondent.

Selon un mode de réalisation avantageux, le premier, le second, le troisième, le quatrième et le cinquième moyens de communication se confondent et comprennent un réseau de communication, par exemple, le réseau internet.

Afin de compléter et illustrer la présente description qui a décrit la structure du dispositif 1, il va maintenant être présenté un exemple illustratif d'utilisation, afin de bien faire apparaître les potentialités de ce nouveau paradigme.

Le cadre d'application est une interaction à distance dans un environnement domotique, appliqué au divertissement et à la surveillance d'un enfant, au domicile, par un parent (utilisateur 5) depuis son lieu de travail, au moyen d'un terminal 12.

L'utilisateur 5, depuis son lieu de travail (zone utilisateur 4) visionne l'intérieur du domicile (zone objet 2), au moyen d'une webcam 8 dont l'image est retransmise, via Internet, sur un ordinateur personnel (terminal utilisateur 12), avantageusement de type standard. L'image vidéo 9 montre un salon. Le dispositif détecte automatiquement et, le cas échéant, souligne graphiquement la présence dans cette scène de trois objets augmentés : une lampe, un téléphone et un lecteur multimédia. Le dispositif permet sélectivement (par exemple lorsque l'on passe un pointeur au dessus de l'objet) de faire apparaître ou de masquer une interface de commande 15 pour chacun desdits trois objets augmentés.

Il est 17h et le parent peut observer, via la vidéo, son enfant qui rentre au domicile.

Le parent sélectionne l'objet téléphone. Ceci fait apparaître une interface de commande proposant au moins un service « appel moi ». Ce service est commandé et déclenche l'établissement d'un appel téléphonique à destination du téléphone présent au domicile, et qui met en relation le parent au moyen de son terminal et l'enfant au moyen dudit téléphone.

Au cours de la conversation qui s'ensuit, le parent propose à son enfant de visualiser le dernier clip vidéo de leur groupe préféré, que le parent vient juste de télécharger.

Le parent sélectionne l'objet lecteur multimédia. Ceci fait apparaître une interface de commande proposant au moins un service « diffusion ». Le parent sélectionne le clip vidéo sur le bureau de son terminal et le fait glisser sur l'interface de commande du service « diffusion ». Ceci déclenche un téléchargement dudit clip du lieu de travail vers le lecteur multimédia au domicile puis une diffusion dudit clip sur ledit lecteur multimédia pour un visionnage par l'enfant.

Afin de ne pas perturber la diffusion du clip, le parent peut sélectionner l'objet lampe, afin de l'éteindre, toujours à distance.

## Revendications

1. Dispositif permettant à un utilisateur (5), situé dans une zone utilisateur (4), d'interagir avec au moins un objet augmenté (3) présent dans un environnement, ledit objet augmenté (3) étant situé dans une zone objet (2), l'objet augmenté (3) comprenant un objet physique (6) et un objet virtuel (7) associés, ledit objet virtuel (7) comprenant au moins un élément de définition d'au moins un service offert par ledit, objet augmenté (2), ledit objet augmenté (3) étant connectable via un premier moyen de communication (10) et ledit dispositif (1) comprenant:
- un moyen de capture vidéo (8), situé en zone objet (2), apte à réaliser une prise d'image vidéo (9), d'au moins une partie dudit environnement,
- un second moyen de communication (11), apte à transmettre ladite image vidéo (9) de la zone objet (2) à la zone utilisateur (4),
- un terminal utilisateur (12) situé en zone utilisateur (4), apte à afficher ladite image vidéo (9), afin de la présenter à l'utilisateur (5),
- un moyen d'identification (13) automatique de l'objet augmenté (3) lorsque l'objet physique (6) associé est présent dans le champ du moyen de capture vidéo (8),
- un premier moyen de communication (10), apte à établir une connexion entre le dispositif (1) et l'objet augmenté (3) identifié, et à récupérer lesdits éléments de définition de service offert par ledit objet augmenté (3),
- un moyen de définition (14) d'interface de commande, apte à définir une interface de commande (15) pour les services de l'objet augmenté (3) identifié en accord avec lesdits éléments de définition de service, et à présenter ladite interface de commande (15) à l'utilisateur (5), via le terminal utilisateur (12),
- un moyen de lecture (16) des commandes desdits services, apte à lire les commandes issues de l'utilisateur (5), en relation avec ladite interface de commande (15),
- un troisième moyen de communication (17), apte à transmettre lesdites commandes à l'objet augmenté (3), pour exécution desdits services par l'objet physique (6).

2. Dispositif selon la revendication 1, comprenant encore un moyen de capture sonore, situé en zone objet (2), apte à réaliser une prise de son de l'environnement, un quatrième moyen de communication, apte à transmettre ledit son de la zone objet (2) à la zone utilisateur (4), le terminal utilisateur (12) comprenant un moyen de restitution sonore, apte à restituer ledit son à l'utilisateur (5).

3. Dispositif selon la revendication 1 ou 2, où le moyen de capture vidéo (8) est pilotable en orientation et/ou en position, où le terminal utilisateur (12) comprend encore un moyen de commande vidéo (18), apte à permettre à l'utilisateur (5) de réaliser ledit pilotage en produisant des commandes de pilotage, et où le dispositif comprend encore un cinquième moyen de communication (19), apte à transmettre lesdites commandes de pilotage de la zone utilisateur (4) à la zone objet (2).

4. Dispositif selon l'une quelconque des revendications 1 à 3, où le moyen d'identification (13) automatique de l'objet augmenté (3) comprend un moyen de reconnaissance de forme de l'objet physique (6).

5. Dispositif selon l'une quelconque des revendications 1 à 4, où le moyen d'identification automatique (13) de l'objet augmenté (3) comprend un moyen de localisation de l'objet physique (6).

6. Dispositif selon l'une quelconque des revendications 1 à 5, où le moyen d'identification automatique (13) de l'objet augmenté (3) comprend un repère identifiant (20) disposé sur ou a proximité de l'objet physique (6).

7. Dispositif selon la revendication 6, où le repère identifiant (20) est un repère visuel.

8. Dispositif selon la revendication 6 ou 7, où le repère identifiant (20) est une étiquette radiofréquence, et où le dispositif comprend encore un lecteur d'étiquette radiofréquence situé en zone objet (2), apte à lire une telle étiquette radiofréquence.

9. Dispositif selon l'une quelconque des revendications 1 à 8, où le moyen de définition d'interface (14), est apte à utiliser une interface de commande (15) directement proposée par l'objet augmenté (3).

10. Dispositif selon l'une quelconque des revendications 1 à 9, où le moyen de définition d'interface (14), est apte à récupérer depuis un moyen de stockage une interface de commande (15) définie en accord avec les éléments de définition de service.

11. Dispositif selon l'une quelconque des revendications 1 à 10, où le moyen de définition d'interface (14), est apte à afficher ladite interface de commande (15), en incrustation dans l'image vidéo (9) affichée sur le terminal utilisateur (12).

12. Dispositif selon l'une quelconque des revendications 1 à 11, où le moyen de lecture (16) des commandes desdits services, en relation avec ladite interface de commande (15), comprend un clavier, une dalle tactile, et/ou un dispositif de pointage.

13. Dispositif selon l'une quelconque des revendications 1 à 12, où le troisième moyen de communication (17) des commandes desdits services à l'objet augmenté (3), comprend une liaison entre le terminal utilisateur (12) et l'objet augmenté (3), et une interface de connexion spécifique entre l'objet virtuel (7) et l'objet physique (6).

14. Dispositif selon l'une quelconque des revendications 1 à 13, où le premier, le second, le troisième, le quatrième et le cinquième moyens de communication comprennent le réseau internet.

## Patentansprüche

1. Vorrichtung, die es einem sich in einer Benutzerzone (4) befindlichen Benutzer (5) ermöglicht, mit mindestens einem in einer Umgebung vorhandenen erweiterten Objekt (3) zu interagieren, wobei sich das besagte erweiterte Objekt (3) in einer Objektzone (2) befindet, wobei das erweiterte Objekt (3) ein physisches Objekt (6) und ein virtuelles Objekt (7), welche assoziiert sind, umfasst, wobei das besagte virtuelle Objekt (7) mindestens ein Element zur Definition mindestens eines von dem besagten erweiterten Objekt (2) angebotenen Dienstes umfasst, wobei das besagte erweiterte Objekt (3) über ein erstes Kommunikationsmittel (10) angeschlossen werden kann, und wobei die besagte Vorrichtung (1) umfasst:
- Ein Videoerfassungsmittel (8), welches sich in der Objektzone (2) befindet und geeignet ist, eine Videoaufnahme (9) mindestens eines Teils der besagten Umgebung vorzunehmen,
- ein zweites Kommunikationsmittel (11), welches geeignet ist, das besagte Videobild (9) von der Objektzone (2) an die Benutzerzone (4) zu übertragen,
- ein Benutzerendgerät (12), welches sich in der Benutzerzone (4) befindet und geeignet ist, dem Benutzer (5) das besagte Videobild (9) anzuzeigen"
- ein Mittel (13) zum automatischen Identifizieren des erweiterten Objektes (3), wenn sich das zugehörige physische Objekt (6) im Blickfeld des Videoerfassungsmittels (8) befindet,
- ein erstes Kommunikationsmittel (10), welches geeignet ist, eine Verbindung zwischen der Vorrichtung (1) und dem identifizierten erweiterten Objekt (3) herzustellen und die besagten Elemente zur Definition des von dem besagten erweiterten Objekt (3) angebotenen Dienstes zu rückzugewinnen,
- ein Mittel zur Definition (14) der Steuerschnittstelle, welches geeignet ist, eine Steuerschnittstelle (15) für die Dienste des identifizierten erweiterten Objektes (3) gemäß den besagten Elementen zur Definition des Dienstes zu definieren und dem Benutzer (5) die besagte Steuerschnittstelle (15) über das Benutzerendgerät (12) anzuzeigen,
- ein Mittel zum Lesen (16) der Befehle der besagten Dienste, welches geeignet ist, die von dem Benutzer (5) in Verbindung mit der besagten Steuerschnittstelle (15) ausgegebenen Befehle zu lesen,
- ein drittes Kommunikationsmittel (17), welches geeignet ist, die besagten Befehle zur Ausführung der besagten Dienste durch das physische Objekt (6) an das erweiterte Objekt (3) zu übertragen.

2. Vorrichtung nach Anspruch 1, weiterhin umfassend ein Tonerfassungsmittel, welches sich in der Objektzone (2) befindet und geeignet ist, eine Tonaufnahme der Umgebung vorzunehmen, ein viertes Kommunikationsmittel, welches geeignet ist, den besagten Ton der Objektzone (2) an die Benutzerzone (4) zu übertragen, wobei das Benutzerendgerät (12) ein Tonwiedergabemittel umfasst, welches geeignet ist, den besagten Ton an den Benutzer (5) wiederzugeben.

3. Vorrichtung nach Anspruch 1 oder 2, wobei das Videoerfassungsmittel (8) in der Ausrichtung und/oder der Position steuerbar ist, wobei das Benutzerendgerät (12) weiterhin ein Videosteuermittel (18) umfasst, welches geeignet ist, dem Benutzer (5) das Durchführen der besagten Steuerung durch Erzeugen der Steuerbefehle zu ermöglichen, und wobei die Vorrichtung weiterhin ein fünftes Kommunikationsmittel (19) umfasst, welches geeignet ist, die besagten Steuerbefehle von der Benutzerzone (4) an die Objektzone (2) zu übertragen.

4. Vorrichtung nach einem beliebigen der Ansprüche 1 bis 3, wobei das Mittel zur automatischen Identifizierung (13) des erweiterten Objektes (3) ein Mittel zur Erkennung der Form des physischen Objektes (6) umfasst.

5. Vorrichtung nach einem beliebigen der Ansprüche 1 bis 4, wobei das Mittel zur automatischen Identifizierung (13) des erweiterten Objektes (3) ein Mittel zur Ortung des physischen Objektes (6) umfasst.

6. Vorrichtung nach einem beliebigen der Ansprüche 1 bis 5, wobei das Mittel zur automatischen Identifizierung (13) des erweiterten Objektes (3) eine auf dem physischen Objekt (6) oder in dessen Nähe angebrachte Identifikationsmarkierung (20) umfasst.

7. Vorrichtung nach Anspruch 6, wobei die Identifikationsmarkierung (20) eine visuelle Markierung ist.

8. Vorrichtung nach Anspruch 6 oder 7, wobei die Identifikationsmarkierung (20) ein Funkfrequenz-Tag ist, und wobei die Vorrichtung weiterhin einen in der Objektzone (2) angeordneten Funkfrequenz-Tag-Leser umfasst, welcher geeignet ist, ein solches Funkfrequenz-Tag zu lesen.

9. Vorrichtung nach einem beliebigen der Ansprüche 1 bis 8, wobei das Mittel zur Definition (14) der Steuerschnittstelle geeignet ist, eine direkt von dem erweiterten Objekt (3) angebotene Steuerschnittstelle (15) zu benutzen.

10. Vorrichtung nach einem beliebigen der Ansprüche 1 bis 9, wobei das Mittel zur Definition (14) der Steuerschnittstelle geeignet ist, eine gemäß den Dienstdefinitionsmitteln definierte Steuerschnittstelle (15) aus einem Speichermittel rückzugewinnen.

11. Vorrichtung nach einem beliebigen der Ansprüche 1 bis 10, wobei das Mittel zur Definition (14) der Steuerschnittstelle geeignet ist, die besagte Steuerschnittstelle (15) als Einblendung in dem am Benutzerendgerät (12) angezeigten Videobild (9) anzuzeigen.

12. Vorrichtung nach einem beliebigen der Ansprüche 1 bis 11, wobei das Mittel zum Lesen (16) der mit der besagten Steuerschnittstelle (15) verbundenen Befehle der besagten Dienste ein Tastenfeld, einen Berührungsbildschirm und/oder eine Zeigevorrichtung umfasst.

13. Vorrichtung nach einem beliebigen der Ansprüche 1 bis 12, wobei das dritte Mittel zur Übertragung (17) der Befehle der besagten Dienste an das erweiterte Objekt (3) eine Verbindung zwischen dem Benutzerendgerät (12) und dem erweiterten Objekt (3) sowie eine spezifische Verbindungsschnittstelle zwischen dem virtuellen Objekt (7) und dem physischen Objekt (6) umfasst.

14. Vorrichtung nach einem beliebigen der Ansprüche 1 bis 13, wobei das erste, das zweite, das dritte, das vierte und das fünfte Kommunikationsmittel das Internet-Netzwerk umfasst.

## Claims

1. A device enabling a user (5), located in a user area (4), to interact with at least one augmented object (3) present in an environment, said augmented object (3) being located in an object area (2), the augmented object (3) comprising a physical object (6) and a virtual object (7) associated with one another, said virtual object (7) comprising at least one definition element for at least one service offered by said augmented object (2), said augmented object (3) being able to be connected via a first means of communication (10) and said device (1) comprising:
- a means of capturing video (8), located in the object area (2), capable of taking a video image (9), of at least one part of said environment,
- a second means of communication (11), capable of transmitting said video image (9) from the object area (2) to the user area (4),
- a user terminal (12) located in the user area (4), capable of displaying said video image (9), in order to present it to the user (5),
- a means of automatically identifying (13) the augmented object (3) when the associated physical object (6) is present in the field of the means of capturing video (8),
- a first means of communication (10), capable of establishing a connection between the device (1) and the identified augmented object (3), and to recover said definition elements of service(s) offered by said augmented object (3),
- a means of defining (14) the control interface, capable of defining a control interface (15) for the services of the identified augmented object (3) according to said service definition elements, and of presenting said control interface (15) to the user (5), via the user terminal (12),
- a means of reading (16) the commands of said services, capable of reading the commands coming from the user (5), in connection with said command interface (15),
- a third means of communication (17), capable of transmitting said commands to the augmented object (3), for the execution of said services by the physical object (6).

2. A device according to claim 1, further comprising a means of capturing sound, located in the object area (2), capable of capturing sound from the environment, a fourth means of communication capable of transmitting said sound from the object area (2) to the user area (4), the user terminal (12) comprising a means of playing back sound, capable of playing said sound for the user (5).

3. A device according to claim 1 or 2, wherein the attitude and/or position of the means of video capture can be controlled, wherein the user terminal (12) also comprises a means of video command (18), capable of enabling the user (5) to carry out said control by producing control commands, and wherein the device further comprises a fifth means of communication (19), capable of transmitting said control commands from the user area (4) to the object area (2).

4. A device according to any of claims 1 to 3, wherein the means of automatically identifying (13) the augmented object (3) comprises a means of recognizing the shape of the physical object (6).

5. A device according to any of claims 1 to 4, wherein the means of automatically identifying (13) the augmented object (3) comprises a means of locating the physical object (6).

6. A device according to any of claims 1 to 5, wherein the means of automatically identifying (13) the augmented object (3) comprises an identifying marker (20) located on or near the physical object (6).

7. A device according to claim 6, wherein the identifying marker (20) is a visual marker.

8. A device according to claim 6 or 7, wherein the identifying marker (20) is a radio frequency label, and wherein the device also comprises a radio frequency label reader located in the object area (2) capable of reading such a radio frequency label.

9. A device according to any of claims 1 to 8, wherein the means of defining the interface (14) is capable of using a control interface (15) proposed directly by the augmented object (3).

10. A device according to any of claims 1 to 9, wherein the means of defining the interface (14) is capable of retrieving a control interface (15) defined according to the service definition elements from a means of storage.

11. A device according to any of claims 1 to 10, wherein the means of defining the interface (14) is capable of displaying said control interface (15) by embedding it in the video image (9) displayed on the user terminal (12).

12. A device according to any of claims 1 to 11, wherein the means of reading (16) the commands for said services, in relation with said control interface (15), comprises a keyboard, a touch pad, and/or a pointing mechanism.

13. A device according to any of claims 1 to 12, wherein the third means of communicating (17) the commands for said services to the augmented object (3) comprises a link between the user terminal (12) and the augmented object (3) and a special connection interface between the virtual object (7) and the physical object (6).

14. A device according to any of claims 1 to 13, wherein the first, second, third, fourth, and fifth means of communication also comprise the Internet.
